# EUROPÄISCHE PATENTSCHRIFT

(11) **EP 2 357 330 B1**
(45) Veröffentlichungstag und Bekanntmachung des Hinweises auf die Patenterteilung: **19.08.2015**
(21) Anmeldenummer: 09013111.1
(22) Anmeldetag: 16.10.2009
(51) Int. Cl.: F01N 1/02, F04B 39/00

(54) **Kühlmittelkreislauf mit Schalldämpfer für einen rohrförmigen einen Hohlraum bildenden Körper**
Cooling circuit with acoustic baffler for a tubular body forming a cavity
Circuit refrigerant avec amortisseur de bruit pour un corps tubulaire formant un espace creux

(43) Veröffentlichungstag der Anmeldung: 17.08.2011
(73) Patentinhaber: TI Automotive Engineering Centre (Heidelberg) GmbH, 69123 Heidelberg (DE)
(72) Erfinder: Kempf, Dominik, 60318 Frankfurt am Main (DE); Emmerich, Olaf, 68169 Mannheim (DE); Liers, Denny, 55595 Weinsheim (DE)
(74) Vertreter: Reiser & Partner

(56) Entgegenhaltungen:
- EP-A1- 2 106 943
- DE-A1- 10 102 040
- DE-A1- 10 331 139
- DE-A1-102004 029 221
- US-A1- 2008 023 262

## Beschreibung

Die Erfindung betrifft einen Kühlmittelkreislauf einer Kühlanlage mit einem rohrförmigen Körper, in den ein Schalldämpfer eingesetzt ist, wobei der Körper einen Hohlraum bildet und wobei der Schalldämpfer als Einsatz ausgebildet ist, der in den Hohlraum des rohförmigen Körpers eingesetzt ist und wobei der Einsatz einen Strömungskanal und wenigstens eine Resonatorkammer begrenzt, welche über einen Verbindungskanal mit dem Strömungskanal verbunden ist.

Ein Resonator-Schalldämpfer für Rohre ist z.B. aus der DE 43 27 562 A1 bekannt. Hierin ist ein Schalldämpfer für von heißen Gasen durchströmte Rohre mit mehreren konzentrisch angeordneten Schalldämpfungskammern bekannt.

Die DE 196 47 425 A1 beschreibt einen Akustikresonator, der mehrere Resonanzkammern aufweist. Die Resonatorkammern können entlang des Innenumfangs oder auf dem Außenumfang der Rohrleitung angeordnet sein.

Ein weiterer Schalldämpfer mit an dem Außenumfang des Rohres angeordneten Resonatorkammern ist aus der DE 101 02 040 A1 gekannt.

Die vorbekannten Schalldämpfer haben den Nachteil, dass sie aufwendig und teuer in der Herstellung sind. Zudem benötigen sie einen großen Bauraum, der gerade bei Anwendungen im PKW-Bereich häufig nicht zur Verfügung steht.

Aus der EP 2 106 943 A1 ist ein Schalldämpfer mit den Merkmalen des Oberbegriffs von Patentanspruch 1 bekannt.

Aufgabe der vorliegenden Erfindung ist es, die Schallemission eines Kühlmittelkreislaufs zu reduzieren, wobei die Wirkung der Schalldämpfung.unabhängig von der Montagesituation gewährleistet sein soll.

Diese Aufgabe wird erfindungsgemäß dadurch gelöst, dass der Einsatz wenigstens einen nach außen weisenden Steg zur Anlage an einer Innenwandung des rohrförmigen Körpers aufweist, wobei der wenigstens eine Steg die Resonatorkammer in einer axialen Richtung des Einsatzes begrenzt.

Diese Gestaltung ermöglicht eine wirksame Schalldämpfung unter Verwendung des akustischen Resonator-Prinzips. Das in der Resonatorkammer eingeschlossene Gasvolumen ist über den vorzugsweise engen Verbindungskanal mit dem Strömungskanal verbunden. Durch die Elastizität des Gasvolumens im Inneren der Resonatorkammer in Kombination mit der trägen Masse des in dem Verbindungskanal befindlichen Gases entsteht ein mechanisches Masse-Feder-System mit einer ausgeprägten Eigenresonanz. Aufgrund dieser Eigenresonanz kann auftretender Lärm wirksam reduziert werden. Ist die Frequenz der Lärmquelle bekannt, kann die Eigenfrequenz der Resonatorkammer hierauf abgestimmt werden. Um eine Schalldämpfung in verschiedenen Frequenzbereichen zu ermöglichen, können mehrere Resonatorkammern mit jeweils unterschiedlichen Eigenfrequenzen vorgesehen werden. Erfindungsgemäß ist der Schalldämpfer als Einsatz ausgebildet, wobei der Einsatz die wenigstens eine Resonatorkammer und den Strömungskanal bildet. Auf diese Weise ist der Schalldämpfer besonders einfach herstellbar. Es genügt, den Einsatz in den rohrförmigen Körper einzusetzen. Weitergehende Anpassungen an dem rohrförmigen Körper sind nicht zwingend erforderlich. Zudem beansprucht der Schalldämpfer keinen zusätzlichen Bauraum an der Außenseite des rohrförmigen Körpers. Auf diese Weise kann die Montage besonders einfach erfolgen, da der Schalldämpfer separat gefertigt und lediglich in den rohrförmigen Körper eingesetzt zu werden braucht. Auch die Herstellungskosten sind aufgrund der Ausgestaltung des Schalldämpfers als Einsatz gering. Ein solcher Schalldämpfer eignet sich besonders für rohrförmige Körper, die von einem Gas durchströmt werden. Erfindungsgemäß ist der Schalldämpfer in einen Kältekreislauf eines Kühlsystems eingesetzt. Der Schalldämpfer ist besonders für mobile Kühlsysteme, wie beispielsweise in einem Kraftfahrzeug, geeignet.

Der Steg kann auf der Außenseite des Innenrohres angeordnet sein und einen Abstandhalter bilden. Auf diese Weise wird der für die Resonatorkammer erforderliche Raum zwischen dem Innenrohr und dem rohrförmigen Körper gebildet. Der Steg kann z.B. als umlaufender, ringförmiger Wulst ausgebildet sein. Ein solcher Steg hat zudem Vorteile, wenn der Schalldämpfer in einem gebogenen rohrförmigen Körper einsetzt wird. Der Einsatz kann sich, mit dem Steg an dem rohrförmigen Körper anliegend, an den Krümmungsradius des rohrförmigen Körpers anpassen, auch wenn er ohne Krümmung oder mit einer abweichenden Krümmung hergestellt wurde.

Der Einsatz weist eine Trennwand auf, welche den Strömungskanal bildet und von der wenigstens einen Resonatorkammer trennt. Dabei ist die Trennwand durch einen Abschnitt des Einsatzes gebildet, der ein Innenrohr ausbildet. Auf diese Weise wird ein einfach herstellbarer und montierbarer Schalldämpfer erhalten. Das Innenrohr formt in dem Inneren des Schalldämpfers den Strömungskanal aus. Dieser kann z.B. koaxial in dem rohrförmigen Körper angeordnet werden. Das Innenrohr kann einen runden oder einen eckigen Querschnitt aufweisen. Vorzugsweise ist der Strömungskanal auf der Innenseite des Innenrohres angeordnet, während an der Außenseite des Innenrohres, in dem zwischen dem Innenrohr und dem rohrförmigen Körper gebildeten Raum die wenigstens eine Resonatorkammer ausgebildet ist.

Vorteilhafter Weise ändert sich eine Innenquerschnittsfläche des Innenrohrs in axialer Richtung des Einsatzes. Dies kann insbesondere dergestalt erfolgen, dass sich das Innenrohr, ausgehend von einer Einlassquerschnittsfläche an einem Einlass des Schalldämpfers, zu einer Zwischenquerschnittsfläche verengt und von dort zu einer Auslassquerschnittsfläche am Auslass des Schalldämpfers erweitert. Auf diese Weise kann durch den Einsatz der Raum für die Resonatorkammer bzw. die Resonatorkammern geschaffen werden, ohne dass der rohrförmige Körper hierfür modifiziert werden muss. Gleichwohl kann ein geringer Strömungswiderstand für ein den Strömungskanal durchströmendes Gas erreicht werden. Dieser wird dann besonders gering gehalten, wenn die Änderung der Innenquerschnittsfläche in axialer Richtung nicht sprunghaft erfolgt. Dies kann durch eine zumindest abschnittweise konische Gestalt des Innenrohres erreicht werden. Wenn die Einlassquerschnittsfläche und die Auslassquerschnittsfläche des Schalldämpfers der Innenquerschnittsfläche des rohrförmigen Körpers im wesentlichen entsprechen, sind weitere Anpassungen des Einsatzes bzw. des rohrförmigen Körpers nicht erforderlich, um das Fluid in den Strömungskanal zu leiten. Vorteilhafter Weise liegt das Innenrohr im Bereich des Einlasses und des Auslasses des Schalldämpfers dicht an dem rohrförmigen Körper an.

Eine besonders kompakte Bauform ergibt sich erfindungsgemäß dadurch, dass der Steg zwei nebeneinander angeordnete Resonatorkammern voneinander trennt. Hierdurch kann der Schalldämpfer auf einfache Weise mehrere Resonatorkammern ausbilden, welche jeweils auf unterschiedliche Eigenfrequenzen abgestimmt sind. Hierdurch kann Schall in unterschiedlichen Frequenzbereichen reduziert werden. Beispielsweise können, um mehrere Resonatorkammern zu bilden, mehrere Stege in axialer Richtung beabstandet vorgesehen werden, wobei ein Steg jeweils zwei Resonatorkammern voneinander trennt.

Eine einfache Herstellung und Montage ergibt sich auch dadurch, dass der Verbindungskanal durch einen kanalförmigen Abschnitt in der Trennwand gebildet ist. Zusätzliche Bauteile sind bei dieser Gestaltung nicht erforderlich. Vorteilhafter Weise kann der Einsatz mit der Trennwand und dem Verbindungskanal ein einstückiges Bauteil sein, dass beispielsweise als ein zusammenhängendes Spritzgussteil hergestellt ist. Die Länge und der Durchmesser des Verbindungskanals (bzw. der Verbindungskanäle) können entsprechend den von Helmholtz entwickelten Grundsätzen zu dem Resonator-Prinzip so gewählt werden, dass die jeweilige Eigenfrequenz der Resonatorkammer in dem gewünschten Frequenzbereich liegt. Von Vorteil verläuft der kanalförmige Abschnitt in radialer Richtung.

Eine weitere Verbesserung wird dadurch erreicht, dass die wenigstens eine Resonatorkammer in einer axialen Richtung des Einsatzes bei einem konstanten Außendurchmesser einen sich ändernden Innendurchmesser aufweist. Auf diese Weise kann insbesondere der Strömungswiderstand im Strömungskanal gering gehalten werden.

Die Verwendbarkeit und die Montage werden dadurch weiter verbessert, wenn der Schalldämpfer aus elastisch biegbarem Material besteht. Auf diese Weise kann der Schalldämpfer in rohrförmige Körper mit einer Biegung oder in flexible Schläuche eingesetzt werden. Als elastisch biegbares Material kann beispielsweise ein elastischer Kunststoff verwendet werden. Auf diese Weise kann erreicht werden, dass die Enden des Einsatzes einen Biegewinkel von mehr als 5°, insbesondere von mehr als 20°, vorteilhafter Weise bis zu 90° zueinander einnehmen können.

Eine wirksame Schalldämpfung in mehreren Frequenzbereichen kann vorteilhafter Weise dadurch erreicht werden, dass in axialer Richtung nebeneinander mehrere Resonatorkammern ausgebildet sind, welche jeweils über einen Verbindungskanal mit dem Strömungskanal verbunden sind. Jede der Resonatorkammern kann auf eine andere Eigenfrequenz abgestimmt sein. In der Praxis hat sich bewährt, bis zu vier Resonatorkammern nebeneinander vorzusehen, welche es ermöglichen in einer entsprechenden Anzahl von Frequenzbereichen den Schall zu reduzieren. Je nach Anwendungsfall kann aber auch eine einzige Resonatorkammer genügen oder eine größere Anzahl an Resonatorkammern vorgesehen werden.

Erfindungsgemäß ist die wenigstens eine Resonatorkammer an ihrer Außenseite durch eine Wandung des rohrförmigen Körpers begrenzt. Insbesondere kann die Resonatorkammer nach außen hin durch die Innenseite des rohrförmigen Körpers begrenzt werden, welche dann die Außenseite der Resonatorkammer bildet, während sie nach innen durch den Einsatz begrenzt ist. Alternativ kann auch der Einsatz eine zusätzlichen Wandung aufweisen, die die Resonatorkammer bzw. die Resonatorkammern in radialer Richtung nach außen begrenzt.

Von Vorteil weist der Einsatz zur Fixierung in dem rohrförmigen Körper an seiner Außenseite einen Klemmbereich auf. Hierdurch kann der Schalldämpfer nach dem Einsetzen in den rohrfürmigen Körper fixiert werden. Besonders einfach ist die Fixierung, wenn der rohrförmige Körper aus einem verformbaren Material besteht und durch eine Klemmeinrichtung, wie z.B. einer Schlauchschelle, mit dem Klemmbereich verspannt wird. Hierbei kann der rohrförmige Körper aus einem elastisch verformbaren Material, wie z.B. Kunststoff, oder einem duktilen Material, wie z.B. Aluminium, bestehen, das in dem Klemmbereich eingeprägt wird. Um eine gute Befestigung zu erhalten, kann der Klemmbereich auf einer oder beiden Seiten durch einen Klemmrand begrenzt sein. Auf diese Weise kann ein Formschluss zwischen Einsatz und rohrförmigen Körper erreicht werden. Der Klemmrand kann dabei durch den Steg gebildet sein. Wenn der Klemmrand Durchbrechungen aufweist, wird eine besonders kompakte Bauweise erreicht, da das Volumen zu beiden Seiten des Klemmrandes Teil einer Resonatorkammer sein kann.

Der rohrförmige Körper kann starr oder flexibel ausgebildet sein. Vorteilhafter Weise ist der rohrförmige Körper ein flexibler Schlauch, beispielsweise aus Kunststoff.

Vorteilhafter Weise weist der rohrförmige Körper in dem Bereich, in dem der Einsatz angeordnet ist, und in den sich daran in axialer Richtung anschließenden Bereichen denselben Durchmesser auf. Änderungen an dem rohrförmigen Körper, insbesondere eine Verbreiterung, um dort die Resonatorkammern vorzusehen, sind nicht erforderlich. Der Einsatz kann einfach in den z.B. durchgehenden rohrförmigen Körper eingesetzt werden.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger Kombination den Gegenstand der Erfindung, auch unabhängig von der Zusammenfassung in einzelnen Ansprüchen oder deren Rückbeziehung.

Es zeigen:
- Fig. 1:: eine Schnittdarstellung eines erfindungsgemäßen Schalldämpfers, eingesetzt in einen geraden rohrförmigen Körper.
- Fig. 2a:: eine perspektivische Ansicht eines erfindungsgemäßen Schalldämpfers aus Fig. 1;
- Fig. 2b:: eine perspektivische Ansicht des Schalldämpfers aus Fig. 2a im Schnitt;
- Fig. 3a:: den Schalldämpfer aus Fig. 1a, eingesetzt in einen gebogenen rohrförmigen Körper, wobei der rohrförmige Körper geschnitten dargestellt ist;
- Fig. 3b:: den Schalldämpfer aus Fig. 3a, wobei der Schalldämpfer und der rohrförmige Körper geschnitten dargestellt sind;
- Fig. 4a:: eine perspektivische Ansicht einer weiteren Ausführungsform eines erfindungsgemäßen Schalldämpfers;
- Fig. 4b:: eine perspektivische Ansicht des schalldämpfers aus Fig. 4a im Schnitt.

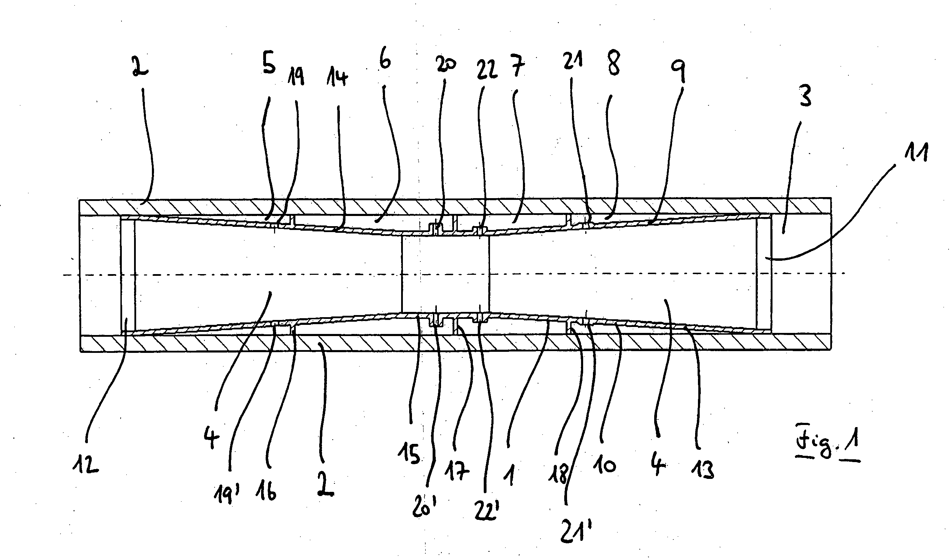

Fig. 1 zeigt einen Schalldämpfer 1 für einen rohrförmigen Körper 2, welcher einen Hohlraum 3 bildet.

Der rohrförmige Körper 2 kann beispielsweise ein Rohr aus Kunststoff oder Metall sein. Der rohrförmige Körper 2 kann aus einem elastisch verformbaren Material bestehen und beispielsweise als Schlauch ausgebildet sein. Der rohrförmige Körper 2 ist ein Teil eines Kühlmittelkreislaufes einer Kühlanlage, bei der das Kühlmittel in dem Inneren des rohrförmigen Körpers 2 zirkuliert. Der dargestellte Schalldämpfer 1 ist insbesondere für denjenigen Teil eines Kühlmittelkreislaufes geeignet, in dem das Kühlmittel gasförmig vorliegt. Auf diese Weise kann der Schalldämpfer 1 von einem nicht dargestellten Verdichter erzeugte Geräusche wirksam reduzieren. Der Schalldämpfer 1 ist dabei als ein Einsatz 26 ausgebindet, der separat gefertigt und bei der Montage in den Hohlraum 3 des rohrförmigen Körper 2 eingesteckt oder eingeschoben wird.

Der Schalldämpfer 1 weist einen mittig angeordneten Strömungskanal 4 auf. Der Strömungskanal 4 ist koaxial mit dem rohrförmigen Körper 2 angeordnet. Weiterhin sind in axialer Richtung nebeneinander vier Resonatorkammern 5, 6, 7, 8 vorgesehen. Der Strömungskanal 4 und die Resonatorkammer 5, 6, 7, 8 sind durch eine Trennwand 9 voneinander getrennt, welche auf ihrer Innenseite den Strömungskanal 4 bildet und jeweils von der außen liegenden Resonatorkammer 5, 6, 7 bzw. 8 trennt. Die Trennwand 9 wird durch einen Abschnitt des als Einsatz ausgebildeten Schalldämpfers 1 gebildet, der ein Innenrohr 10 ausbildet. Hierbei erstrecken sich die Resonatorkammern 5, 6, 7, 8 jeweils ringförmig um das Innenrohr 10 herum.

Fig. 1 lässt weiterhin gut erkennen, dass sich die Innenquerschnittsfläche des Innenrohres in axialer Richtung des Schalldämpfers 1 ändert. Ausgehend von einer Einlassquerschnittsfläche an einem Einlass 11 des Schalldämpfers 1 verengt sich die Innenquerschnittsfläche des Innenrohres 10, bis sie in einem mittleren Bereich 15 eine Zwischenquerschnittsfläche erreicht. Von dort erweitert sich die Innenquerschnittsfläche wieder bis zu einer Auslassquerschnittsfläche am Auslass 12 des Schalldämpfers 1. Die Einlassquerschnittsfläche und die Auslassquerschnittsfläche am Einlass 11 bzw. Auslass 12 entsprechen in etwa der Innenquerschnittsfläche des rohrförmigen Körpers 2. Auf diese Weise kann die Strömung ungehindert und mit nur geringen Strömungsverlusten durch den rohrförmigen Körper 2 in den Strömungskanal 4 des Schalldämpfers 1 gelangen und von dort wieder in den rohrförmigen Körper 2 austreten.

Das Innenrohr 10 hat bei der dargestellten Ausführungsform zwei konische Abschnitte 13, 14, welche den Einlass 11 bzw. den Auslass 12 mit einem Bereich 15 mit engstem Querschnitt verbinden. Die konischen Abschnitte 13 und 14 haben in der dargestellten Ausführungsform dieselbe axiale Länge. Der Bereich 15 mit dem engsten Querschnitt hat einen zylinderförmigen Querschnitt.

Jede der Resonatorkammern 5, 6, 7, 8 ist nach innen durch das Innenrohr 10 und nach außen durch einen Abschnitt des rohrförmigen Körpers 2 begrenzt. Der Schalldämpfer 1 weist zudem Stege 16, 17, 18 auf, so dass in dem zwischen dem Innenrohr 10 und dem rohrförmigen Körper 2 gebildeten Raum mehrere Resonatorkammern 5, 6, 7, 8 abgetrennt werden. Jeder dieser Stege 16, 17, 18 ist an dem Innenrohr 10 angeordnet und ringförmig umlaufend ausgebildet. Der Außendurchmesser der Stege 16, 17, 18 entspricht dem Innendurchmesser des rohrförmigen Körpers 2, so dass der rohrförmige Körper 2 im Bereich der Stege 16, 17, 18 an dem Schalldämpfer 1 dicht anliegt. Die umlaufenden Stege 16, 17, 18 weisen in radialer Richtung nach außen. Der Steg 16 trennt dabei die in axialer Richtung nebeneinanderliegenden Resonatorkammern 5, 6. Entsprechend trennt der Steg 17 die Resonatorkammern 6, 7 und der Steg 18 die Resonatorkammern 7, 8. Die Resonatorkammern 5 und 8 sind an den äußeren Enden durch einen an dem rohrförmigen Körper 2 anliegenden Abschnitt des Innenrohres 10 begrenzt. Die Resonatorkammern 5, 6, 7, 8 weisen über ihre axiale Länge einen konstanten Außendurchmesser, jedoch einen sich ändernden Innendurchmesser auf.

Die Resonatorkammern 5, 6, 7, 8 ermöglichen eine Schallreduktion nach dem von Helmholtz entwickelten Resonatorprinzip. Hierzu sind die jeweils ein Volumen umfassenden Resonatorkammern 5, 6, 7, 8 jeweils über Verbindungskanäle 19 und 19', 20 und 20', 21 und 21' bzw. 22 und 22' mit dem Strömungskanal 4 verbunden. Bei der dargestellten Ausführungsform ist jede Resonatorkammer 5, 6, 7, 8 über zwei gegenüber angeordnete Verbindungskanäle 19 und 19', 20 und 20', 21 und 21' bzw. 22 und 22' mit dem Strömungskanal 4 verbunden. Der Verbindungskanal umschließt jeweils eine kleine kreisförmige Öffnung. Die Verbindungskanäle 19, 19', 20, 20', 21, 21', 22 und 22' haben dabei für jede der Resonatorkammern 5, 6, 7, 8 unterschiedliche Längen, was die Abstimmung auf jeweils den gewünschten Frequenzbereich ermöglicht. Bei der dargestellten Ausführungsform weisen die beiden gegenüberliegend angeordneten Verbindungskanäle 19, 19' eine Länge in der Größenordnung der Wanddicke auf. Geringfügig länger sind die beiden Verbindungskanäle 21, 21'. Eine deutlich größere Länge haben die Verbindungskanäle 22, 22' und 20, 20'. Die Verbindungskanäle 19, 19', 20, 20', 21, 21', 22, 22' sind jeweils durch einen kanalförmigen Abschnitt der Trennwand 9 bzw. des Innenrohres 10 gebildet. Die Verbindungskanäle 19, 19', 20, 20', 21, 21', 22, 22' können an einer gewünschten Position am Umfang des Einsatzes angeordnet werden.

Der dargestellte Schalldämpfer 1 kann als Spritzgussteil aus Kunststoff gefertigt sein. Insbesondere eignet sich ein elastisches Kunststoffmaterial. Der Schalldämpfer 1 ist dann auch in gebogene rohrförmige Körper unproblematisch einsetzbar. Zudem kann sich der Schalldämpfer dann problemlos einer auftretenden Abflachung oder Ovalisierung der rohrförmigen Körpers, welche z.B. in dem Bereich einer Biegung des rohrförmigen Körpers auftreten an, anpassen.

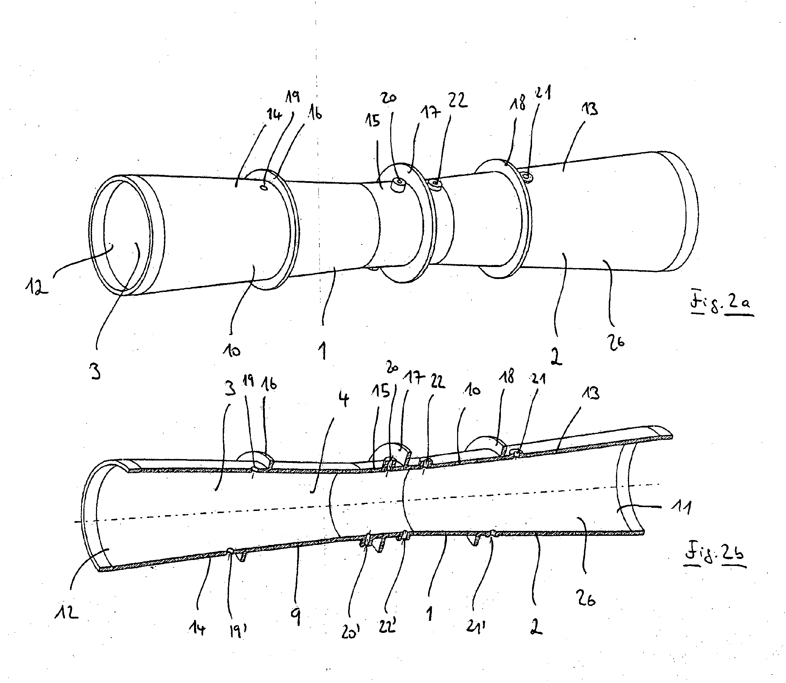

Fig. 2a und Fig. 2b zeigen den Schalldämpfer 1 aus Fig. 1 vor dem Einsetzen in den rohrförmigen Körper. Gut zu erkennen sind die an dem Innenrohr 10 angeordneten Stege 16, 17, 18 sowie die konischen Abschnitte 13, 14 und den Bereich 15 mit dem engsten Querschnitt des Innenrohres 10. Gut zu erkennen sind weiterhin die Verbindungskanäle 19, 19', 20, 20', 21, 21', 22, 22'.

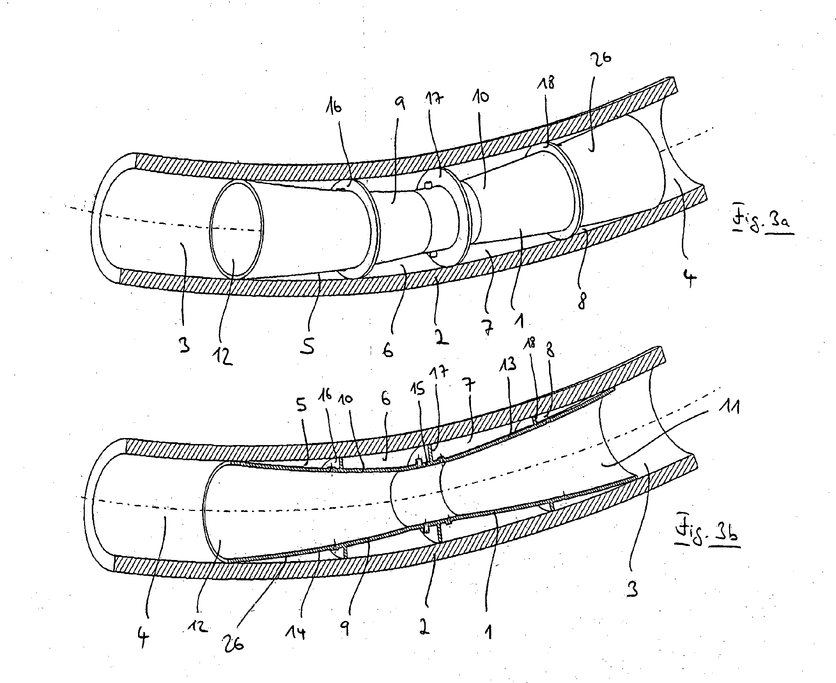

Fig. 3a und Fig. 3b zeigen den Schalldämpfer 1 eingesetzt in einen eine Biegung aufweisenden rohrförmigen Körper 2. Beispielsweise kann der rohrförmige Körper als ein Schlauch ausgebildet sein, welcher mit einer entsprechenden Biegung verlegt ist. Da der Schalldämpfer 1 aus einem elastischen Kunststoffmaterial gefertigt ist, kann sich dieser an die Biegung des rohrförmigen Körpers 2 anpassen, auch wenn er beispielsweise in der in Fig. 2a dargestellten geraden Ausführungsform hergestellt wurde. Die Stege 16, 17, 18 sorgen dabei auch in einem gebogenen rohrförmigen Körper für eine gute Anlage des Schalldämpfers 1 an der Innenseite des rohrförmigen Körpers, ohne hierbei die Biegung des rohrförmigen Körpers zu verhindern.

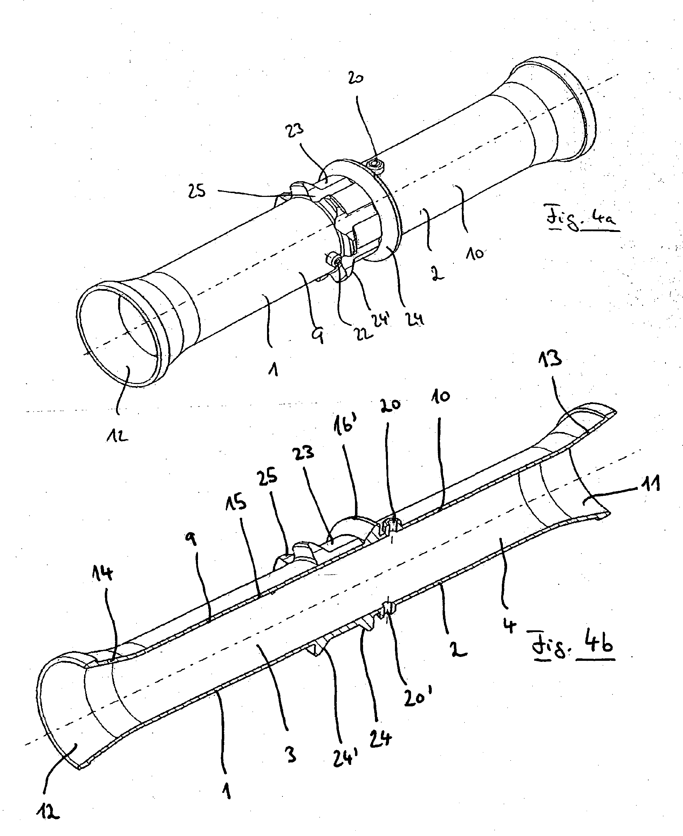

Fig. 4a und Fig. 4b zeigen eine weitere Ausführungsform des erfindungsgemäßen Schalldämpfers vor dem Einsetzen in einen rohrförmigen Körper. Hierbei sind Teile gleicher Funktion mit denselben Bezugszeichen versehen wie in den vorangegangenen Figuren. Auf die diesbezügliche Beschreibung, welche entsprechend für die Fig. 4a und 4b gilt, wird verwiesen.

Bei der in Fig. 4a und 4b dargestellten Ausführungsform sind nur zwei Resonatorkammern ausgebildet, die durch den umlaufenden Steg 36 voneinander getrennt sind. Der Steg 16' hat, wie die Stege 16, 17 und 18 bei der oben beschriebenen Ausführungsform, eine umlaufende ringförmige Gestalt. Der Steg 16' ist zudem an der Außenseite des Innenrohres 10 vorspringend angeordnet. Jede der Resonatorkammern ist über zwei Verbindungskanäle 20, 20' bzw. 22, 22' mit dem Strömungskanal 4 verbunden. Bei der in Fig. 4a und 4b dargestellten Ausführungsform weist das Innenrohr gleichfalls konische Abschnitte 13, 14 auf. Diese sind jedoch in axialer Richtung kürzer ausgebildet, als dies bei der in Fig. 1 dargestellten Ausführungsform der Fall ist. Dementsprechend ist der Bereich mit dem engsten Querschnitt 15 entsprechend länger ausgebildet. Auf diese Weise steht für die Resonatorkammern ein größeres Volumen zur Verfügung.

Zur Fixierung des Schalldämpfers 1 weist der Einsatz an der Außenseite des Innenrohrs 10 einen Klemmbereich 23 auf. Wenn der rohrförmige Körper aus einem verformbaren Material besteht, wie dies beispielsweise bei einem Schlauch der Fall ist, kann durch eine Klemmvorrichtung, beispielsweise durch eine Schlauchschelle, der rohrförmige Körper mit dem Schalldämpfer 1 in dem Klemmbereich 23 verspannt werden. Hierzu ist bei der dargestellten Ausführungsform die Wanddicke des Innenrohres 10 in dem Klemmbereich 23 verstärkt. Der Klemmbereich 23 wird auf beiden Seiten durch einen nach außen weisenden Klemmrand 24, 24' begrenzt. Auf diese Weise wird eine gute axiale Fixierung erreicht. Bei der dargestellten Ausführungsform wird der Klemmrand 24 durch eine schräge Seitenfläche des Steges 16' gebildet. Der von dem Klemmrand 24 in axialer Richtung beabstandete Klemmrand 24' weist Durchbrechungen 25 auf. Auf diese Weise kann der Raum zu beiden Seiten des Klemmrandes 24' eine durchgehende Resonatorkammer ausbilden.

### Bezugszeichenliste

- 1: Schalldämpfer
- 2: rohrförmiger Körper
- 3: Hohlraum
- 4: Strömungskanal
- 5: Resonatorkammer
- 6: Resonatorkammer
- 7: Resonatorkammer
- 8: Resonatorkammer
- 9: Trennwand
- 10: Innenrohr
- 11: Einlass
- 12: Auslass
- 13: konischer Abschnitt
- 14: konischer Abschnitt
- 15: Bereich mit engstem Querschnitt
- 16, 16': Steg
- 17: Steg
- 18: Steg
- 19, 19': Verbindungskanäle
- 20, 20': Verbindungskanäle
- 21, 21': Verbindungskanäle
- 22, 22': Verbindungskanäle
- 23: Klemmbereich
- 24, 24': Klemmrand
- 25: Durchbrechungen
- 26: Einsatz

## Patentansprüche

1. Kühlmittelkreislauf einer Kühlanlage mit einem rohrförmigen Körper (2), in den ein Schalldämpfer (1) eingesetzt ist, wobei der Körper (2) einen Hohlraum bildet und wobei der Schalldämpfer (1) als Einsatz (26) ausgebildet ist, der in den Hohlraum (3) des rohrförmigen Körpers (2) eingesetzt ist und wobei der Einsatz (26) einen Strömungskanal (4) und wenigstens eine Resonatorkammer (5, 6, 7, 8) begrenzt, welche über einen Verbindungskanal (19, 19', 20, 20', 21, 21', 22, 22') mit dem Strömungskanal (4) verbunden ist,wobei der Einsatz (26) wenigstens einen nach außen weisenden Steg (16, 17, 18) zur Anlage an einer Innenwandung des rohrförmigen Körpers (2) aufweist, wobei der wenigstens eine Steg (16, 17, 18) die Resonatorkammer (5, 6, 7, 8) in einer axialen Richtung des Einsatzes (26) begrenzt und wobei die wenigstens eine Resonatorkammer (5, 6, 7, 8) an ihrer Außenseite durch eine Wandung des rohrförmigen Körpers (2) begrenzt wird und wobei der Einsatz (26) eine Trennwand (9) aufweist, welche den Strömungskanal (4) bildet und von der wenigstens einen Resonatorkammer (5, 6, 7, 8) trennt und wobei die Trennwand (9) durch einen Abschnitt des Einsatzes (26) gebildet ist, der ein Innenrohr (10) ausbildet, **dadurch gekennzeichnet, dass** der Steg (16, 17, 18) zwei nebeneinander angeordnete Resonatorkammern (5, 6, 7, 8) voneinander trennt.

2. Kühlmittelkreislauf nach Anspruch 1, **dadurch gekennzeichnet, dass** die Innenquerschnittsfläche des Innenrohrs (10) sich in axialer Richtung des Einsatzes (26) ändert.

3. Kühlmittelkreislauf nach Anspruch 1 oder 2, **dadurch gekennzeichnet, dass** sich das Innenrohr (10), ausgehend von einer Einlassquerschnittsfläche an einem Einlass (11) des Schalldämpfers, zu einer Zwischenquerschnittsfläche verengt und von dort zu einer Auslassquerschnittsfläche am Auslass (12) des Schalldämpfers erweitert.

4. Kühlmittelkreislauf nach einem der Ansprüche 1 bis 3, **dadurch gekennzeichnet, dass** der Verbindungskanal (19, 19', 20, 20', 21, 21', 22, 22') durch einen kanalförmigen Abschnitt in der Trennwand (9) gebildet ist.

5. Kühlmittelkreislauf nach einem der Ansprüche 1 bis 4, **dadurch gekennzeichnet, dass** die wenigstens eine Resonatorkammer (5, 6, 7, 8) in einer axialen Richtung des Einsatzes (26) bei einem konstanten Außendurchmesser einen sich ändernden Innendurchmesser aufweist.

6. Kühlmittelkreislauf nach einem der Ansprüche 1 bis 5, **dadurch gekennzeichnet, dass** der Schalldämpfer (1) aus elastisch biegbarem Material besteht.

7. Kühlmittelkreislauf nach einem der Ansprüche 1 bis 6, **dadurch gekennzeichnet, dass** in axialer Richtung nebeneinander mehrere Resonatorkammern (5, 6, 7, 8) ausgebildet sind, welche jeweils über wenigstens einen Verbindungskanal (19, 19', 20, 20', 21, 21', 22, 22') mit dem Strömungskanal verbunden sind.

8. Kühlmittelkreislauf nach einem der Ansprüche 1 bis 7, **dadurch gekennzeichnet, dass** der Einsatz (26) zur Fixierung in dem rohrförmigen Körper (2) an seiner Außenseite einen Klemmbereich (23) aufweist.

9. Kühlmittelkreislauf nach Anspruch 1, **dadurch gekennzeichnet, dass** der rohrförmige Körper ein flexibler Schlauch ist.

10. Kühlmittelkreislauf nach Anspruch 1 oder 9, **dadurch gekennzeichnet, dass** der rohrförmige Körper (2) in dem Bereich, in dem der Einsatz (26) angeordnet ist und in den sich daran in axialer Richtung anschließenden Bereichen im Wesentlichen denselben Durchmesser aufweist.

## Claims

1. Coolant circuit of a cooling system, with a pipe-shaped body (2) into which a sound absorber is inserted (1), wherein the body (2) forms a cavity, and wherein the silencer (1) is in the form of an insert (26) which is inserted into the cavity (3) of the pipe-shaped body (2), and wherein the insert (26) delimits a flow channel (4) and at least one resonator chamber (5, 6, 7, 8) which is connected to the flow channel (4) via a connecting channel (19, 19', 20, 20', 21, 21', 22, 22'), wherein the insert (26) has at least one outward pointing web (16, 17, 18) for contacting an interior wall of the pipe-shaped body (2), wherein the at least one web (16, 17, 18) delimits the resonator chamber (5, 6, 7, 8) in an axial direction of the insert (26), and wherein the at least one resonator chamber (5, 6, 7, 8) is delimited at its outer side by a wall of the pipe-shaped body (2), and wherein the insert (26) has a partition (9) which forms the flow channel (4) and which separates said flow channel from the at least one resonator chamber (5, 6, 7, 8), and wherein the partition (9) is formed by a section of the insert (26) which forms an inner pipe (10), **characterized in that** the web (16, 17, 18) separates two adjacent resonator chambers (5, 6, 7, 8).

2. Coolant circuit according to Claim 1, **characterized in that** the internal cross-sectional area of the inner pipe (10) varies in the axial direction of the insert (26).

3. Coolant circuit according to Claim 1 or 2, **characterized in that** the inner pipe (10), starting from an inlet cross section area at an inlet (11) of the sound absorber, narrows to an intermediate cross section area and widens from there to an outlet cross section area at the outlet (12) of the sound absorber.

4. Coolant circuit according to one of Claims 1 to 3, **characterized in that** the connecting channel (19, 19', 20, 20', 21, 21', 22, 22') is formed by a channel-like section in the partition (9).

5. Coolant circuit according to one of Claims 1 to 4, **characterized in that** the at least one resonator chamber (5, 6, 7, 8) has a changing inner diameter in an axial direction of the insert, while the other diameter remains constant.

6. Coolant circuit according to one of Claims 1 to 5, **characterized in that** the sound absorber (1) is made of an elastically bendable material.

7. Coolant circuit according to one of Claims 1 to 6, **characterized in that** multiple adjacent resonator chambers (5, 6, 7, 8) are formed in the axial direction, which are each connected to the flow channel via at least one connecting channel (19, 19', 20, 20', 21, 21', 22, 22').

8. Coolant circuit according to one of Claims 1 to 7, **characterized in that** the insert (26) has a clamping zone (23) on its outside for fixing in the pipe-shaped body (2).

9. Coolant circuit according to Claim 1, **characterized in that** the pipe-shaped body is a flexible hose.

10. Coolant circuit according to Claim 1 or 9, **characterized in that** the pipe-shaped body (2) has substantially the same diameter in the area in which the insert (26) is situated and in the areas adjacent in the axial direction.

## Revendications

1. Circuit de réfrigérant d'une installation de refroidissement comprenant un corps tubulaire (2), dans lequel est inséré un amortisseur de bruit (1), le corps (2) formant une cavité, et l'amortisseur de bruit (1) étant réalisé sous forme d'insert (26) qui est inséré dans la cavité (3) du corps tubulaire (2) et l'insert (26) limitant un canal d'écoulement (4) et au moins une chambre de résonateur (5, 6, 7, 8) qui est connectée par le biais d'un canal de liaison (19, 19', 20, 20', 21, 21', 22, 22') au canal d'écoulement (4), l'insert (26) présentant au moins une nervure tournée vers l'extérieur (16, 17, 18) pour l'application contre une paroi interne du corps tubulaire (2), l'au moins une nervure (16, 17, 18) limitant la chambre de résonateur (5, 6, 7, 8) dans une direction axiale de l'insert (26) et l'au moins une chambre de résonateur (5, 6, 7, 8) étant limitée au niveau de son côté extérieur par une paroi du corps tubulaire (2) et l'insert (26) présentant une paroi de séparation (9) qui forme le canal d'écoulement (4) et le sépare de l'au moins une chambre de résonateur (5, 6, 7, 8) et la paroi de séparation (9) étant formée par une portion de l'insert (26) qui constitue un tube interne (10), **caractérisé en ce que** la nervure (16, 17, 18) sépare l'une de l'autre deux chambres de résonateur juxtaposées (5, 6, 7, 8).

2. Circuit de réfrigérant selon la revendication 1, **caractérisé en ce que** la surface en section transversale intérieure du tube interne (10) varie dans la direction axiale de l'insert (26).

3. Circuit de réfrigérant selon la revendication 1 ou 2, **caractérisé en ce que** le tube interne (10), partant d'une surface en section transversale d'entrée au niveau d'une entrée (11) de l'amortisseur de bruit, se rétrécit jusqu'à une surface en section transversale intermédiaire et s'élargit de là jusqu'à une surface en section transversale de sortie au niveau de la sortie (12) de l'amortisseur de bruit.

4. Circuit de réfrigérant selon l'une quelconque des revendications 1 à 3, **caractérisé en ce que** le canal de liaison (19, 19', 20, 20', 21, 21', 22, 22') est formé par une portion en forme de canal dans la paroi de séparation (9).

5. Circuit de réfrigérant selon l'une quelconque des revendications 1 à 4, **caractérisé en ce que** l'au moins une chambre de résonateur (5, 6, 7, 8) présente un diamètre intérieur variable dans une direction axiale de l'insert (26) pour un diamètre extérieur constant.

6. Circuit de réfrigérant selon l'une quelconque des revendications 1 à 5, **caractérisé en ce que** l'amortisseur de bruit (1) se compose de matériau élastiquement flexible.

7. Circuit de réfrigérant selon l'une quelconque des revendications 1 à 6, **caractérisé en ce que** dans la direction axiale plusieurs chambres de résonateur (5, 6, 7, 8) sont réalisées les unes à côté des autres, lesquelles sont à chaque fois connectées par le biais d'au moins un canal de liaison (19, 19', 20, 20', 21, 21', 22, 22') au canal d'écoulement.

8. Circuit de réfrigérant selon l'une quelconque des revendications 1 à 7, **caractérisé en ce que** l'insert (26) présente au niveau de son côté extérieur une région de serrage (23) pour la fixation dans le corps tubulaire (2).

9. Circuit de réfrigérant selon la revendication 1, **caractérisé en ce que** le corps tubulaire est un tuyau flexible.

10. Circuit de réfrigérant selon la revendication 1 ou 9, **caractérisé en ce que** le corps tubulaire (2), dans la région dans laquelle est disposé l'insert (26) et dans les régions s'y raccordant dans la direction axiale, présente essentiellement le même diamètre.
